# EUROPÄISCHE PATENTSCHRIFT

(11) **EP 0 380 173 B1**
(45) Veröffentlichungstag und Bekanntmachung des Hinweises auf die Patenterteilung: **04.09.1996**
(21) Anmeldenummer: 90200149.4
(22) Anmeldetag: 22.01.1990
(51) Int. Cl.: H04N 5/782

(54) **System zum Wiedergeben von Bildsignalen von einem bandförmigen Aufzeichnungsträger**
System for the reproduction of picture signals from a recording medium in tape form
Système pour la reproduction des signaux d'image à partir d'un support d'enregistrement en forme de ruban

(30) Priorität: 27.01.1989 AT 164/89
(43) Veröffentlichungstag der Anmeldung: 01.08.1990
(73) Patentinhaber: Philips Electronics N.V., 5621 BA Eindhoven (NL)
(72) Erfinder: Kuchar, Franz INT. OCTROOIIBUREAU B.V., NL- 5656 AA Eindhoven (NL)
(74) Vertreter: van der Kruk, Willem Leonardus

(56) Entgegenhaltungen:
- EP-A- 0 180 450
- GB-A- 2 124 056

## Beschreibung

Die Erfindung bezieht sich auf ein System zum Wiedergeben von Bildsignalen von einem bandförmigen magnetisierbaren Aufzeichnungsträger, auf dem die Bildsignale in nebeneinanderliegenden schrägen Spuren aufgezeichnet sind, mit mindestens einem rotierend antreibbaren Magnetkopf zum aufeinanderfolgenden Abtasten der Spuren, mit einer Impulserzeugungseinrichtung, die jeweils am Beginn des Abtastens einer Spur durch den Magnetkopf eine Positionsimpulsflanke erzeugt, die die Position des Magnetkopfes gegenüber dem Anfang einer Spur und der darin aufgezeichneten Bildsignale kennzeichnet, und mit einem zum Eintasten von Zeichensignalen in die wiedergegebenen Bildsignale vorgesehenen Zeichengenerator, der die Zeichensignale jeweils in Abhängigkeit von einer mittels einer Steuereinrichtung in einem Zeitabstand von der Positionsimpulsflanke erzeugten Startimpulsflanke und in Abhängigkeit von aus den wiedergegebenen Bildsignalen abgetrennten Zeilenimpulsen in die wiedergegebenen Bildsignale eintastet. Ein solches System ist aus einem im Handel erhältlichen Magnetband-Videorecorder bekannt.

Beim Eintasten von Zeichensignalen in ein aus nebeneinanderliegenden schrägen Spuren wiedergegebenes Bildsignal, um beispielsweise alphanumerische Zeichen gemeinsam mit den den Bildsignalen entsprechenden Bildern auf dem Bildschirm eines Fernsehgerätes wiederzugeben, wird der jeweilige Startzeitpunkt, der durch die jeweilige Startimpulsflanke bestimmt ist und zu dem der Zeichengenerator zum Eintasten der Zeichensignale in die vom Aufzeichnungsträger wiedergegebenen Bildsignale aktiviert wird, an sich beliebig danach festgelegt, bei welcher Zeile, also bei welcher Bildhöhe am Bildschirm, und bei welchem Abstand vom Beginn dieser Zeile mit dem Wiedergeben der Zeichen begonnen werden soll. Bei dem vorstehend erwähnten bekannten System ist der durch die jeweilige Startimpulsflanke bestimmte Startzeitpunkt in einem stets gleichbleibenden fixen Zeitabstand von der jeweiligen Positionsimpulsflanke festgelegt. Beispielsweise durch Dehnungen des bandförmigen Aufzeichnungsträgers, durch Störungen im Lauf des bandförmigen Aufzeichnungsträgers oder durch Störungen beim rotierenden Antreiben des Magnetkopfes kann es zu zeitlichen Verschiebungen der vom Aufzeichnungsträger wiedergegebenen Bildsignale gegenüber der jeweiligen Positionsimpulsflanke kommen. Da bei dem bekannten System stets ein fixer Zeitabstand zwischen der Positionsimpulsflanke und der Startimpulsflanke gewählt ist, kann daher beim Auftreten von solchen zeitlichen Verschiebungen der Fall eintreten, daß die jeweilige Startimpulsflanke in Relation zu den Zeilenimpulsen in den wiedergegebenen Bildsignalen sich zeitlich verschiebt, so daß das Eintasten der zeichensignale beispielsweise bei einem Halbbild der wiedergegebenen Bildsignale bei einer bestimmten Zeile und beim nachfolgenden entsprechenden Halbbild bei einer anderen Zeile beginnt. Dies hat aber zur Folge, daß der Bildinhalt der eingetasteten Zeichensignale gegenüber dem Bildinhalt der vom Aufzeichnungsträger wiedergegebenen Bildsignale in Richtung der Bildhöhe springt, was beim Betrachten der wiedergegebenen Bildinhalte von einem Betrachter als störend empfunden wird.

Die Erfindung hat sich zur Aufgabe gestellt, ein System der eingangs angeführten Gattung zu schaffen, bei dem die vorstehend erläuterten Schwierigkeiten nicht auftreten und somit kein störendes Springen des Bildinhaltes der eingetasteten Zeichensignale gegenüber dem Bildinhalt der wiedergegebenen Bildsignale entsteht. Hiefür ist gemäß der Erfindung vorgesehen, daß die aus den Bildsignalen abgetrennten Zeilenimpulse zusätzlich der Startimpulsflanken erzeugenden Steuereinrichtung zugeführt werden und daß die Steuereinrichtung eine Detektoreinrichtung zum Detektieren des jeweils gleichen Zeilenimpulses in den wiedergegebenen Bildsignalen aufweist und in Abhängigkeit von jeweils dem gleichen detektierten Zeilenimpuls die Startimpulsflanke für den Zeichengenerator erzeugt und daß die Detektoreinrichtung eine Zeitfensterstufe, die jeweils eine Zeitspanne nach der Positionsimpulsflanke zu einem Einschaltzeitpunkt eingeschaltet wird und für eine vorgegebene Zeitfensterdauer eingeschaltet bleibt, und eine von der Zeitfensterstufe gesteuerte Flankendetektorstufe zum Detektieren des Auftretens einer vorgegebenen Flanke des jeweils gleichen Zeilenimpulses nach dem Einschaltzeitpunkt innerhalb der Zeitfensterdauer aufweist. Auf diese Weise ist erreicht, daß die jeweilige Startimpulsflanke in keinem fixen Zeitabstand, sondern in einem veränderbaren Zeitabstand von der Positionsimpulsflanke in Abhängigkeit vom Auftreten des jeweils gleichen Zeilenimpulses in den wiedergegebenen Bildsignalen erzeugt wird, so daß das Eintasten der Zeichensignale in die wiedergegebenen Bildsignale mit Sicherheit in Abhängigkeit von dem jeweils gleichen Zeilenimpuls gestartet wird. Hiedurch beginnt die Wiedergabe des Bildinhaltes der eingetasteten Zeichensignale am Bildschirm eines Fernsehgerätes stets bei der gleichen Zeile des Bildinhaltes der vom Aufzeichnungsträger wiedergegebenen Bildsignale, so daß vorteilhafterweise kein störendes Springen des Bildinhaltes der eingetasteten Zeichensignale gegenüber dem Bildinhalt der wiedergegebenen Bildsignale auftritt. Hiebei ist durch die besondere Ausbildung der Detektoreinrichtung mit Hilfe einer Zeitfensterstufe und einer von der Zeitfensterstufe gesteuerten Flankendetektorstufe der besonders wichtige Vorteil erreicht, daß das Detektieren des jeweils gleichen Zeilenimpulses in den wiedergegebenen Bildsignalen auch dann mit großer Sicherheit möglich ist, wenn in der vor dem jeweils zu detektierenden Zeilenimpuls liegenden Zeilenimpulsfolge eine Störung auftritt, wie etwa ein Ausfall von einem oder mehreren Zeilenimpulsen oder ein Auftreten von einem oder mehreren Störimpulsen. Eine solche Störung tritt beim Wiedergeben von aufgezeichneten Bildsignalen bei einer von der Aufzeichnungsgeschwindigkeit abweichenden Wiedergabegeschwindigkeit systembedingt auf, wobei aber aufgrund der erfindungsgemäßen Ausbildung der Detektoreinrichtung trotzdem ein unerwünschtes Springen von eingetasteten Zeichen in vertikaler Richtung verhindert ist. Weiters ist als vorteilhaft zu erwähnen, daß durch die erfindungsgemäßen Maßnahmen eine Detektoreinrichtung erhalten ist, die ohne Ausnützung der Bildimpulse auskommt, so daß vorteilhafterweise auch bei einer gestörten Wiedergabe der Bildimpulse vom Aufzeichnungsträger eine einwandfreie Detektion des jeweils gleichen Zeilenimpulses gewährleistet ist. Weiters ist hiedurch eine im Hinblick auf eine Realisierung mit einem Mikroprozessor günstige Ausbildung der Detektoreinrichtung erreicht.

Es kann noch erwähnt werden, daß aus dem Dokument GB-A-2 124 056 ein Videorecorder bekannt ist, der einen Zeichengenerator zum Eintasten von Zeichen in aufzuzeichnende Bildsignale aufweist und bei dem eine Detektoreinrichtung zum Detektieren des jeweils gleichen Zeilenimpulses vorgesehen ist. Hiebei ist diese Detektoreinrichtung aber durch eine Zähleinrichtung gebildet, mit der jeweils die Anzahl der nach einem Bildimpuls auftretenden Zeilenimpulse gezählt wird, um einen bestimmten Zeilenimpuls zu detektieren. Bei einer solchen Detektoreinrichtung besteht aber das Problem, daß bei einem Ausfall eines Bildimpulses oder bei einem Ausfall mindestens eines vor dem bestimmten Zeilenimpuls an sich vorgesehenen Zeilenimpulses oder bei einem Auftreten mindestens eines Störimpulses vor dem bestimmten Zeilenimpuls es aufgrund des Zählvorganges zu einem fehlerhaften Detektionsergebnis kommt, was hingegen bei einem erfindungsgemäßen System vorteilhafterweise nicht der Fall sein kann.

Bei einem erfindungsgemäßen System hat sich als besonders vorteilhaft erwiesen, wenn die Detektoreinrichtung zusätzlich eine Zeitmeßstufe zum Messen des Zeitabstandes zwischen dem Einschaltzeitpunkt der Zeitfensterstufe und dem Auftrittszeitpunkt der vorgegebenen Flanke des detektierten Zeilenimpulses und eine Zeitkorrekturstufe aufweist, die in Abhängigkeit von dem gemessenen Zeitabstand den nachfolgenden Einschaltzeitpunkt der Zeitfensterstufe im wesentlichen zur Mitte zwischen den vorgegebenen Flanken von zwei zwei Zeilenimpulsen verschiebt. Dies ist im Hinblick auf eine besonders hohe Detektionssicherheit vorteilhaft.

Die Zeitfensterdauer der Zeitfensterstufe kann dem Zeitabstand zwischen mehreren Zeilenimpulsen entsprechen und die Flankendetektorstufe kann zum Detektieren der vorgegebenen Flanke beispielsweise des letzten der innerhalb der Zeitfensterdauer auftretenden Zeilenimpulse ausgebildet sein, was aber eine relativ lange Detektionsdauer zur Folge hat. Als vorteilhaft hat sich erwiesen, wenn die Zeitfensterdauer der Zeitfensterstufe im wesentlichen dem Zeitabstand zwischen zwei Zeilenimpulsen gleich ist. Hiedurch wird eine besonders kurze Detektionsdauer zum Detektieren des jeweils gleichen Zeilenimpulses erreicht, weil während der Zeitfensterdauer der Zeitfensterstufe jeweils nur ein einziger Zeilenimpuls auftritt, dessen vorgegebene Flanke mit der Flankendetektorstufe detektiert wird.

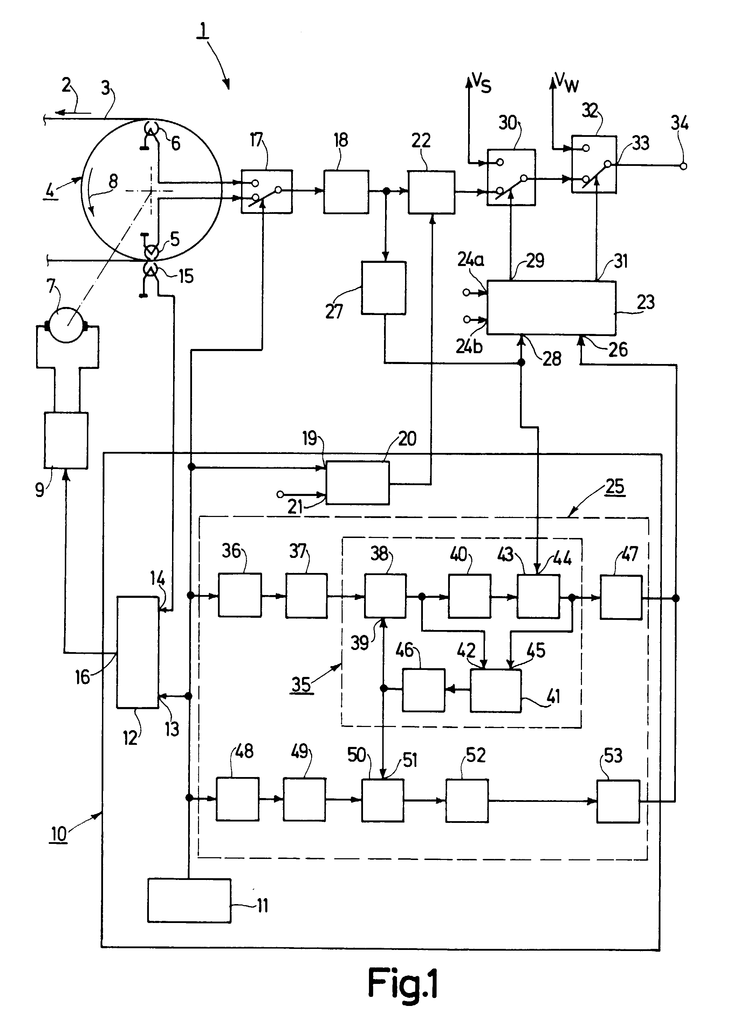

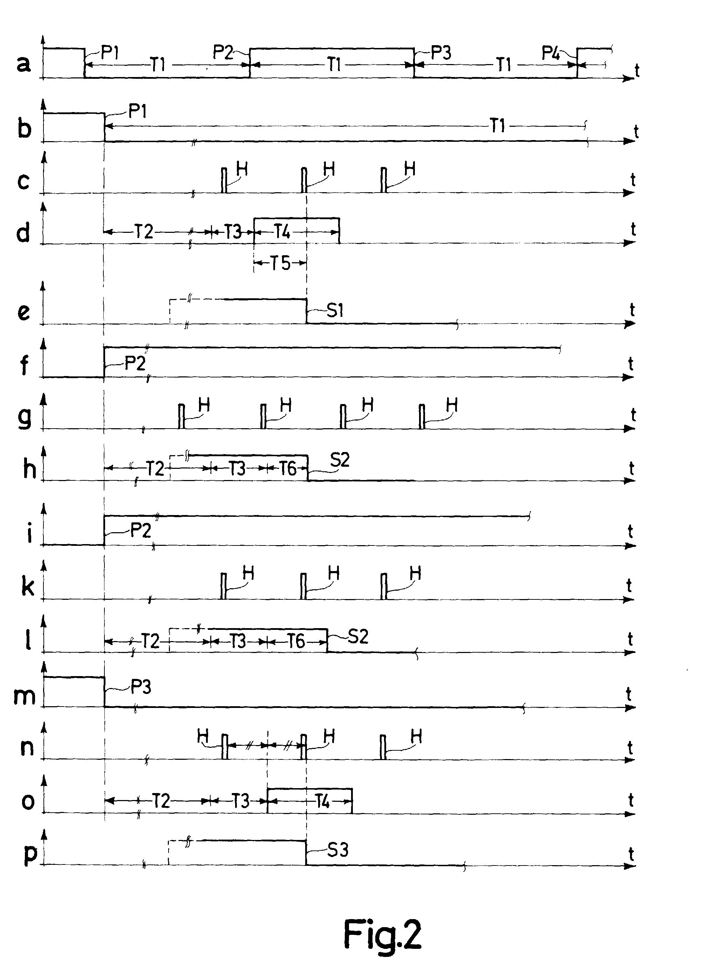

Die Erfindung wird im folgenden anhand eines in den Zeichnungen dargestellten Ausführungsbeispieles näher beschrieben, auf das dieselbe jedoch nicht beschränkt sein soll. Die Fig.1 zeigt schematisch die erfindungswesentlichen Teile eines Systems zum Wiedergeben von Bildsignalen von einem bandförmigen magnetisierbaren Aufzeichnungsträger, das einen Zeichengenerator zum Eintasten von Zeichensignalen in die wiedergegebenen Bildsignale aufweist. Die Fig.2 zeigt Zeitverläufe von Signalen, die im System gemäß Fig.1 auftreten und die aufeinanderfolgend mit den Kleinbuchstaben a bis p bezeichnet sind.

Die Fig.1 zeigt ein System 1 zum Wiedergeben von Bildsignalen von einem bandförmigen magnetisierbaren, in seiner Längsrichtung gemäß dem Pfeil 2 antreibbaren Aufzeichnungsträger 3, der im folgenden kurz Magnetband genannt ist. Auf dem Magnetband 3 sind Bildsignale in nebeneinanderliegenden schrägen Spuren aufgezeichnet, wobei in jeder Spur die einem Halbbild entsprechenden Bildsignale gespeichert sind, wie dies von bestehenden Systemen her bekannt ist. Das System 1 weist eine trommelförmige Abtasteinrichtung 4 auf, um die das Magnetband 3 in einer schraubenlinienförmigen Bahn in einem Winkelbereich von etwa 180° herumgeführt ist und die zwei diametral zueinander angeordnete, rotierend antreibbare Magnetköpfe 5 und 6 zum aufeinanderfolgenden Abtasten der auf dem Magnetband vorgesehenen schrägen Spuren aufweist. Zum Antreiben der beiden Magnetköpfe 5 und 6 ist ein Motor 7 vorgesehen, der die Magnetköpfe 5 und 6 in Richtung des Pfeiles 8 rotierend antreibt und der über eine Verstärkerstufe 9 gespeist wird.

Das System 1 weist einen Mikroprozessor 10 auf, der eine Mehrzahl von Funktionen erfüllt, von denen nachfolgend aber nur die im Zusammenhang mit der vorliegenden Erfindung wesentlichen Funktionen angeführt sind. Zur Erläuterung sind die hier angeführten programmäßig realisierten Funktionen des Mikroprozessors schematisch blockschaltbildmäßig darge stellt und beschrieben.

Mit dem Mikroprozessor 10 ist eine Impulserzeugungsstufe 11 realisiert, die jeweils am Beginn des Abtastens einer schrägen Spur durch einen der beiden Magnetköpfe 5 und 6 eine Positionsimpulsflanke P1, P2, P3, P4 erzeugt, so daß sich der in Fig.2a dargestellte Signalverlauf eines Impulszuges mit aufeinanderfolgend abwechselnden steigenden und fallenden Positionsimpulsflanken ergibt. Bei dem vorliegenden System, das zum Wiedergeben von Bildsignalen gemäß dem PAL-Fernsehsystem vor gesehen ist, weisen die Positionsimpulsflanken einen gleich bleibenden Zeitabstand T1 von 20msec auf. Jede der fallenden Positionsimpulsflanken P1, P3 kennzeichnet die Position des Magnetkopfes 5 und jede der steigenden Positionsimpulsflanken P2, P4 kennzeichnet die Position des Magnetkopfes 6 gegenüber dem Anfang einer von dem betreffenden Magnetkopf 5 bzw. 6 abzutastenden Spur und damit gegenüber dem Anfang der in dieser Spur aufgezeichneten, einem Halbbild entsprechenden Bildsignale. Es sind somit die fallenden Positionsimpulsflanken P1, P3 dem Magnetkopf 5 und die steigenden Positionsimpulsflanken P2, P4 dem Magnetkopf 6 zugeordnet.

Die mit der Impulserzeugungsstufe 11 erzeugten Positionsimpulsflanken P1, P2, P3, P4 werden einer mit dem Mikroprozessor 10 realisierten Servostufe 12 an einem Eingang 13 der selben zugeführt. Der Servostufe 12 werden weiters an einem zweiten Eingang 14 derselben die Ausgangsimpulse eines Positionsgeber Magnetkopfes 15 zugeführt, der mit einem nicht dargestellten, an der Abtasteinrichtung 4 vorgesehenen Dauermagneten, der dieselbe Winkellage wie der Magnetkopf 5 auf weist und mit diesem mitrotiert, zusammenwirkt und der pro Umdrehung der beiden Magnetköpfe 5 und 6 immer dann einen Ausgangsimpuls liefert, wenn der Magnetkopf 5 den Anfang einer von ihm abzutastenden Spur erreicht. Weiters werden der Servostufe 12 drehzahlabhängige Tachoimpulse eines von dem Motor 7 angetriebenen Tachogenerators zur Drehzahlregelung des Motors 7 zugeführt, was der Einfachheit halber nicht dargestellt ist. Die Servostufe 12 liefert an einem Ausgang 16 derselben ein Drehzahl und Phasenregelsignal, das über die Verstärkerstufe 9 dem Motor 7 zugeführt wird. Durch dieses Regelsignal wird der Motor 7 und folglich die Magnetköpfe 5 und 6 so angetrieben, daß die vom Positionsgeber-Magnetkopf 15 abgegebenen Ausgangsimpulse stets dieselbe Phasenlage zu den dem Magnetkopf 5 zugeordneten fallenden Positionsimpulsflanken P1, P3 der Impulserzeugungsstufe 11 aufweisen.

Die Positionsimpulsflanken P1, P2 , P3 , P4 werden weiters einer im Wiedergabesignalweg der Bildsignale vorgeschenen Umschalteinrichtung 17 zur Steuerung derselben zugeführt. Mit der Umschalteinrichtung 17 sind die von den beiden Magnetköpfen 5 und 6 aus den Spuren halbbildweise aufeinanderfolgend abgetasteten, über eine nicht dargestellte rotierende Transformatoreinrichtung der Umschalteinrichtung 17 zugeführten Bildsignale einer Signalverarbeitungseinrichtung 18 im Wiedergabesignalweg zuführbar, die Verstärkerschaltungen und Demodulationsschaltungen für die vom Magnetband wiedergegebenen Bildsignale enthält. Die Umschalteinrichtung 17 wird von den fallenden Positionsimpulsflanken P1, P3 in jene Schaltstellung geschaltet, in der die vom Magnetkopf 5 wiedergegebenen Bildsignale der Signalverarbeitungseinrichtung 18 zugeführt werden, und von den steigenden Positionsimpulsflanken P2, P4 in jene Schaltstellung, in der die vom Magnetkopf 6 wiedergegebenen Bildsignale der Signalverarbeitungseinrichtung 18 zugeführt werden.

Die Positionsimpulsflanken P1, P2, P3, P4 werden weiters einem Eingang 19 einer mit dem Mikroprozessor 10 realisierten Bildimpulserzeugungsstufe 20 zugeleitet. Mit der Bildimpulserzeugungsstufe 20 ist in Abhängigkeit von den ihr zugeführten Positionsimpulsflanken und in Abhängigkeit von der im System eingeschalteten Wiedergabebetriebsart, die aus einer Mehrzahl von hinsichtlich der Fortbewegungsgeschwindigkeit des Magnetbandes unterschiedlichen Wiedergabebetriebsarten im System auswählbar ist, halbbildweise je ein künstlicher Bildimpuls erzeugbar. Der Bildimpulserzeugungsstufe 20 ist dabei an einem weiteren Eingang 21 derselben ein Steuersignal zuführbar, das der im System 1 eingeschalteten Wiedergabebetriebsart entspricht. Die mit der Bildimpulserzeugungsstufe 20 erzeugten künstlichen Bildimpulse werden einer Bildimpulseintaststufe 22 im Wiedergabesignalweg zugeführt, mit der die künstlichen Bildimpulse in die von der Signalverarbeitungseinrichtung 18 abgegebenen Bildsignale eingetastet werden, wobei der Zeitpunkt des Eintastens der künstlichen Bildimpulse vor dem Auftreten der in den wiedergegebenen Bildsignalen enthaltenen Bildimpulse gewählt wird. Mit solchen künstlichen Bildimpulsen wird bei allen Wiedergabebetriebsarten mit von der normalen Fortbewegungsgeschwindigkeit des Magnetbandes abweichender Fortbewegungsgeschwindigkeit eine einwandfreie Synchronisation des zur Wiedergabe der von dem Magnetband abgetasteten Bildsignale vorgesehenen Fernsehrgerätes erreicht.

Das System 1 weist weiters zum Eintasten von Zeichensignalen, beispielsweise von Zeichensignalen zum Erzeugen von alphanumerischen Zeichen, aber auch von Symbolen und dergleichen, einen Zeichengenerator 23 auf. Der Zeichengenerator 23 weist zwei Steuereingänge 24a und 24b auf, denen Steuerbefehle zuführbar sind, mit denen festlegbar ist, welche gewünschten Zeichensignale in die wiedergegebenen Bildsignale eingetastet werden sollen. Der Zeichengenerator 23 tastet die gewünschten Zeichensignale jeweils in Abhängigkeit von einer mittels einer mit dem Mikroprozessor 10 realisierten Steuereinrichtung 25 in einem Zeitabstand von der jeweiligen Positionsimpulsflanke P1, P2, P3, P4 erzeugten Startimpulsflanke, die einem weiteren Eingang 26 des Zeichengenerators 23 zugeführt wird, und in Abhängigkeit von aus den wiedergegebenen Bildsignalen mit einer an die Signalverarbeitungseinrichtung 18 angeschlossenen Zeilenimpulsabtrennstufe 27 abgetrennten Zeilenimpulsen, die einem weiteren Eingang 28 des Zeichengenerators 23 zugeführt werden, in die wiedergegebenen Bildsignale ein. Dabei wird mit jeder Startimpulsflanke der Zeichengenerator 23 zum Eintasten von Zeichensignalen freigegeben und das Eintasten der Zeichensignale erfolgt zeilenweise in Abhängigkeit von den nach der Startimpulsflanke auftretenden Zeilenimpulsen. Der Zeichengenerator 23 steuert über einen ersten Ausgang 29 desselben eine Schwarzwert-Eintaststufe 30, mit der in den Wiedergabesignalweg anstelle der wiedergegebenen Bildsignale eine Spannung Vₛ eintastbar ist, die dem Schwarzwert der wiedergebenen Bildsignale entspricht. Weiters steuert der Zeichengenerator 23 über einen zweiten Ausgang 31 desselben eine Weißwert-Eintaststufe 32, mit der in den Wiedergabesignalweg anstelle der wiedergegebenen Bildsignale eine Spannung V_{w} eintastbar ist, die dem Weißwert der wiedergegebenen Bildsignale entspricht. Mit Hilfe dieser beiden Eintaststufen 30 und 32 sind Zeichensignale eintastbar, die auf dem Bildschirm eines Fernsehgerätes beispielsweise als weiße Zeichen mit schwarzer Umrandung wiedergegeben werden. Die wiedergegebenen Bildsignale und die darin eingetasten Zeichensignale sind einem Fernsehrgerät von einem mit dem Ausgang 33 der Weißwert-Eintaststufe 32 verbundenen Anschluß 34 über weitere nicht dargestellte Signalverarbeitungseinrichtungen, die weitere Verstärkerschaltungen und Modulationsschaltungen enthalten, zuführbar. Die auf dem Bildschirm wiedergegebenen Zeichen können beispielsweise Angaben über die in dem System eingeschaltete Betriebsart darstellen; beispielsweise können mit Hilfe von alphanumerischen Zeichen auf dem Bildschirm eines Fernsehgerätes die Wörter "Normaler Vorlauf", "Aufnahme", "Schneller Vorlauf", "Schneller Rücklauf" und dergleichen gebildet werden.

Wie aus Fig.1 ersichtlich, werden nunmehr die mit der Zeilenimpulsabtrennstufe 27 aus den wiedergegebenen Bildsignalen abgetrennten Zeilenimpulse zusätzlich der Steuereinrichtung 25 zugeführt. Die Steuereinrichtung 25 weist eine Detektoreinrichtung 35 zum Detektieren des jeweils gleichen Zeilenimpulses in den wiedergegebenen Bildsignalen auf und erzeugt in Abhängigkeit von jeweils dem gleichen detektierten Zeilenimpuls die Startimpulsflanke für den Zeichengenerator 23, die dem Eingang 26 desselben zugeführt wird. Im folgenden ist die Steuereinrichtung 25 und die darin enthaltene Detektoreinrichtung 35 detailliert beschrieben.

Der Steuereinrichtung 25 werden ebenfalls die mit der Impulserzeugungsstufe 11 erzeugten Positionsimpulsflanken P1, P2, P3, P4 zugeführt. Die Steuereinrichtung 25 enthält eine Flankendetektorstufe 36 zum Detektieren der fallenden Positionsimpulsflanken P1, P3. Die Flankendetektorstufe 36 aktiviert beim Feststellen einer fallenden Positionsimpulsflanke eine Zeitverzögerungsstufe 37, die eine fixe Verzögerungsdauer T2 von beispielsweise 2,3msec aufweist. Nach Ablauf der Verzögerungsdauer T2 aktiviert die Zeitverzögerungsstufe 37 eine ebenfalls als Zeitverzögerungsstufe ausgebildete Zeitkorrekturstufe 38, die aber eine ausgehend von einer Grundverzögerungsdauer von beispielsweise 64µsec veränderbare Verzögerungsdauer T3 aufweist, deren Wert durch ein der Zeitkorrekturstufe 38 an einem Steuereingang 39 derselben zugeführtes Steuersignal beispielsweise zwischen Null und 128µsec veränderbar ist. Nach Ablauf der veränderbaren Verzögerungsdauer T3 wird von der Zeitkorrekturstufe 38 erstens eine Zeitfensterstufe 40 aktiviert, die somit jeweils eine Zeitspanne nach einer fallenden Positionsimpulsflanke P1, P3 zu einem Einschaltzeitpunkt eingeschaltet wird, und zweitens eine Zeitmeßstufe 41 über einen Steuereingang 42 derselben gestartet. Die Zeitfensterstufe 40 bleibt für eine vorgegebene Zeitfensterdauer T4 eingeschaltet. In vorliegendem Fall bleibt die Zeitfensterstufe 40 für eine Zeitfensterdauer T4 von geringfügig mehr als dem Zeitabstand zwischen zwei Zeilenimpulsen, beispielsweise für 70µsec, eingeschaltet. Die Zeitfensterstufe 40 steuert eine Flankendetektorstufe 43, der an einem Eingang 44 die mit der Zeilenimpulsabtrennstufe 27 abgetrennten Zeilenimpulse zugeführt werden. Die Zeitfensterstufe 40 aktiviert innerhalb ihrer Zeitfensterdauer T4 die Flankendetektorstufe 43 zum Detektieren des Auftretens einer vorgegebenen Flanke, hier der fallenden Flanke, des jeweils gleichen Zeilenimpulses nach dem Einschaltzeitpunkt innerhalb der Zeitfensterdauer T4. Sobald die Flankendetektorstufe 43 die fallende Flanke des jeweils gleichen Zeilenimpulses detektiert, gibt sie ein Steuersignal an einen weiteren Steuereingang 45 der Zeitmeßstufe 41 ab, das die von der Zeitkorrekturstufe 38 her über den Steuereingang 42 gestartete Zeitmeßstufe 41 wieder stoppt. Die Zeitmeßstufe 41 mißt und speichert hiedurch den Zeitabstand T5 zwischen dem Einschaltzeitpunkt der Zeitefensterstufe 40 und dem Auftrittszeitpunkt der fallenden Flanke des innerhalb der Zeitfensterdauer T4 auftretenden Zeilenimpulses. Die Zeitmeßstufe 41 gibt den von ihr gemessenen und gespeicherten Zeitabstand in Form eines Meßwertes an eine Zeitrechenstufe 46 ab, die aus dem ihr zugeführten Meßwert eine neue Verzögerungsdauer T3 für die Zeitkorrekturstufe 38 errechnet, indem sie zu dem Wert der vorherigen, alten Verzögerungsdauer T3 der Zeitkorrekturstufe 38 den Wert des gemessenen Zeitabstandes T5 addiert und davon den Wert des halben Zeitabstandes zwischen zwei Zeilenimpulsen, also 32µsec, subtrahiert. Die in der Zeitrechenstufe 46 errechnete neue Verzögerungsdauer T3 wird in Form eines Steuersignales dem Steuereingang 39 der Zeitkorrekturstufe 38 zugeführt, wodurch die veränderbare Verzögerungsdauer der Zeitkorrekturstufe 38 auf die neue Verzögerungsdauer T3 eingestellt wird. Sobald die Flankendetektorstufe 43 die fallende Flanke des innerhalb der Zeitfensterdauer T4 auftretenden jeweils gleichen Zeilenimpulses detektiert hat, gibt sie wie erwähnt ein Steuersignal an den weiteren Steuereingang 45 der Zeitmeßstufe 41 zum Stoppen derselben ab. Dieses Steuersignal wird weiters auch einem Startimpulsflankengenerator 47 zugeführt, der in Abhängigkeit von dem ihm zugeführten Steuersignal eine Startimpulsflanke, hier eine fallende Flanke, an den Eingang 26 des Zeichengenerators 23 abgibt.

Die Steuereinrichtung 25 enthält eine weitere Flankendetektorstufe 48 zum Detektieren der steigenden Positionsimpulsflanken P2, P4. Die weitere Flankendetektorstufe 48 aktiviert bei Feststellen einer steigenden Positionsimpulsflanke P2, P4 eine Zeitverzögerungsstufe 49 mit einer fixen Verzögerungsdauer T2, die mit der fixen Verzögerungsdauer T2 der Zeitverzögerungsstufe 37 übereinstimmt. Nach Ablauf der Verzögerungsdauer T2 aktiviert die Zeitverzögerungsstufe 49 eine weitere Zeitverzögerungsstufe 50, die aber eine veränderbare Verzögerungsdauer T3 aufweist, die mit der veränderbaren Verzögerungsdauer T3 der Zeitverzögerungsstufe 38 übereinstimmt und durch das von der Zeitrechenstufe 46 abgegebene, einem Steuereingang 51 zugeführte Steuersignal ebenso wie bei der Zeitverzögerungsstufe 38 veränderbar ist. Die Zeitverzögerungsstufe 50 aktiviert nach Ablauf der veränderbaren Verzögerungsdauer T3 eine weitere Zeitverzögerungsstufe 52, die eine fixe Verzögerungsdauer T6 von beispielsweise 32 µsec aufweist. Nach Ablauf der Verzögerungsdauer T6 gibt die Zeitverzögerungsstufe 52 ein Steuersignal an einen weiteren Startimpulsflankengenerator 53 ab, der daraufhin eine Startimpulsflanke, hier eine fallende Flanke, an den Eingang 26 des Zeichengenerators 23 abgibt.

Im folgenden ist die Funktionsweise des Systems 1 und insbesondere der Steuereinrichtung 25 anhand der Fig.1 und der Zeitverläufe von Signalen gemäß Fig.2 erläutert. Wie erwähnt, werden der Steuereinrichtung 25 die mit der Impulserzeugungsstufe 11 erzeugten Positionsimpulsflanken P1, P2, P3, P4, wie diese in Fig.2a dargestellt sind, zugeführt. Mit der Flankendetektorstufe 36 wird zuerst die dem Magnetkopf 5 und folglich dem mit dem Magnetkopf 5 abgetasten ersten Halbbild zugeordnete fallende Positionsimpulsflanke P1, die in Fig.2b dargestellt ist, detektiert. In Fig.2c sind in Relation zu dieser fallenden Positionsimpulsflanke P1 die mit dem Magnetkopf 5 abgetasteten Zeilenimpuls H dargestellt, die mit der Zeilenimpulsabtrennstufe 27 aus den wiedergegebenen Bildsignalen abgetrennt und dem Zeichengenerator 23 und der Flankendetektorstufe 43 zugeführt werden. Wenn die Flankendetektorstufe 36 die fallende Positionsimpulsflanke P1 detektiert hat, wird von der Flankendetektorstufe 36 die Zeitverzögerungsstufe 37 aktiviert, die eine Verzögerungsdauer T2 von 2,3msec aufweist, wie dies in Fig.2d angegeben ist. Nach Ablauf der Verzögerungsdauer T2 wird von der Zeitverzögerungsstufe 37 die als Zeitkorrekturstufe vorgesehene Zeitverzögerungsstufe 38 aktiviert, wobei gemäß Fig.2d angenommen ist, daß die veränderbare Verzögerungsdauer T3 der Zeitkorrekturstufe 38 im vorliegenden Moment auf einen Wert von 35µsec eingestellt ist. Somit wird in diesem Fall nach Ablauf der Verzögerungsdauer T2 der Zeitverzögerungsstufe 37 und der Verzögerungsdauer T3 der Zeitkorrekturstufe 38 von der Zeitkorrekturstufe 38 die Zeitfensterstufe 40 für die Fensterdauer T4, die 70µsec beträgt, eingeschaltet und die Zeitmeßstufe 41 gestartet, wie dies in Fig.2d angedeutet ist. Die Zeitfensterstufe 40 aktiviert für die Zeitfensterdauer T4 die Flankendetektorstufe 43, die die fallende Flanke des innerhalb der Zeitfensterdauer T4 auftretenden Zeilenimpulses H detektiert und zum Auftrittszeitpunkt der fallenden Flanke ein Steuersignal zum Stillsetzen der Zeitmeßstufe 41 an den weiteren Steuereingang 45 derselben abgibt. Die Zeitmeßstufe 41 ermittelt den Zeitabstand T5 zwischen dem Einschaltzeitpunkt der Zeitfensterstufe 40 und dem Auftrittszeitpunkt der fallenden Flanke des innerhalb der Zeitfensterdauer T4 auftretenden Zeilenimpulses, wie dies ebenfalls in Fig.2d angedeutet ist. Es sei beispielsweise angenommen, daß der Zeitabstand T5 mit 43µsec gemessen worden ist. Danach errechnet die Zeitrechenstufe 46 die neue Verzögerungsdauer T3 für die Zeitkorrekturstufe 38, indem sie zu dem Wert der vorherigen, alten Verzögerungsdauer T3 den Wert des gemessenen Zeitabstandes T5 addiert und davon den Wert des halben Zeilenabstandes zwischen zwei Zeilenimpulsen subtrahiert. Die neue Verzögerungsdauer T3 ergibt sich dann bei vorliegend angenommenen Fall mit 46µsec. Aufgrund dieses Ergebnisses gibt die Zeitrechenstufe 46 an die Zeitkorrekturstufe 38 ein Steuersignal ab, das die Verzögerungsdauer T3 der Zeitkorrekturstufe 38 auf die neue Verzögerungsdauer T3 von 46µsec beim vorliegend angenommenen Fall einstellt. Wenn die Flankendetektorstufe 43 die fallende Flanke des innerhalb der Zeitfensterdauer T4 auftretenden Zeilenimpulses H feststellt, gibt sie ihr Steuersignal auch an den Startimpulsflankengenerator 47 ab, der daraufhin eine Startimpulsflanke S1 an den Eingang 26 des Zeichensignalgenerators 23 abgibt, wie diese in Fig.2e dargestellt ist. Hiedurch wird der Zeichengenerator 23 aktiviert und beginnt bei Auftreten des ersten nach der Startimpulsflanke S1 auftretenden Zeilenimpulses H mit dem Eintasten der Zeichensignale in die wiedergegebenen Bildsignale entsprechend dem nach dem Auftreten der fallenden Positionsimpulsflanke P1 vorliegenden ersten Halbbild.

Nach diesem Eintastvorgang in die Bildsignale gemäß dem ersten Halbbild tritt die nächste Positionsimpulsflanke, nämlich die steigende Positionsimpulsflanke P2 auf, wie sie in Fig.2f dargestellt ist. Die Fig.2g zeigt die nach der steigenden Positionsimpulsflanke P2 mit dem Magnetkopf 6 wiedergegebenen Zeilenimpulse H, die entsprechend einem interlinierten Bildsignal gegenüber den vom Magnetkopf 5 nach der Positionsimpulsflanke P1 wiedergegebenen Zeilenimpulsen um die Dauer einer halben Zeile zeitverschoben sind. Mit der weiteren Flankendetektorstufe 48 wird die steigende Positionsimpulsflanke P2 detektiert und daraufhin die Zeitverzögerungsstufe 49 aktiviert. Nach Ablauf der Verzögerungsdauer T2 der Zeitverzögerungsstufe 49 wird die Zeitverzögerungsstufe 50 aktiviert, deren veränderbare Verzögerungsdauer über den Steuereingang 51 von der Zeitrechenstufe 46 her auf die zuvor neu ermittelte Verzögerungsdauer T3 von 46µsec eingestellt ist. Nach Ablauf der Verzögerungsdauer T3 aktiviert die Zeitverzögerungsstufe 50 die weitere Zeitverzögerungsstufe 52, die nach Ablauf ihrer Verzögerungsdauer T6 von 32µsec den weiteren Startimpulsflankengenerator 53 aktiviert, der daraufhin eine Startimpulsflanke S2 an den Eingang 26 des Zeichengenerators 23 abgibt , wie diese in Fig.2h dargestellt ist. Hiedurch wird der Zeichengenerator 23 aktiviert und beginnt beim Auftreten des ersten nach der Startimpulsflanke S2 auftretenden Zeilenimpulses H mit dem Eintasten der Zeichensignale in die wiedergegebenen Bildsignale entsprechend dem nach dem Auftreten der Positionsimpulsflanke P2 vorliegenden zweiten Halbbild.

Wenn es sich bei den wiedergegebenen Bildsignalen um keine interlinierten, sondern um nichtinterlinierte Bildsignale handelt, dann weisen die Zeilenimpulse des zweiten Halbbildes keine zeitliche Verschiebung um die Dauer einer halben Zeile gegenüber den Zeilenimpulsen des ersten Halbbildes auf. Dieser Fall ist in den Figuren 2i und 2k dargestellt, wobei in der Fig.2i die steigende Positionsimpulsflanke P2, die dem zweiten Halbbild zugeordnet ist, und in Fig.2k die dem zweiten Halbbild entsprechenden Zeilenimpulse dargestellt sind. In diesem Fall wird die Verzögerungsdauer T6 der Zeitverzögerungsstufe 52 größer gewählt als dies vorstehend anhand der Fig.2h beschrieben wurde, beispielsweise mit 48µsec, so daß dann die vom Startimpulsflankengenerator 48 erzeugte Startimpulsflanke S2 später erzeugt wird, wie dies in Fig.21 dargestellt ist. Dieses spätere Erzeugen der Startimpulsflanke S2 kann aber auch bei einem interlinierten Bildsignal, dessen Zeilenimpulse in Fig.2g dargestellt sind, erfolgen.

Nach dem Eintasten der Zeichensignale in die dem zweiten Halbbild entsprechenden Bildsignale tritt nachfolgend die fallende Positionsimpulsflanke P3 auf, die von der Flankendetektorstufe 36 detektiert wird und in Fig.2m dargestellt ist. Die Fig.2n zeigt die nach dem Auftreten der Positionsimpulsflanke P3 wiedergegebenen Zeilenimpulse H gemäß dem ersten Halbbild, wobei angenommen ist, daß diese Zeilenimpulse dieselbe zeitliche Relativlage zu der Positionsimpulsflanke P3 aufweisen wie die Zeilenimpulse gemäß Fig.2c gegenüber der Positionsimpulsflanke P1. Nach der Detektion der fallenden Positionsimpulsflanke P3 wird von der Flankendetektorstufe 36 die Zeitverzögerungsstufe 37 aktiviert. Nach Ablauf der Verzögerungsdauer T2 der Zeitverzögerungsstufe 37 wird die Zeitkorrekturstufe 38 aktiviert, deren variable Verzögerungsdauer T3 aufgrund der zuvor ermittelten Zeitwerte auf die neue Verzögerungsdauer T3 von 46µsec eingestellt ist. Nach Ablauf der Verzögerungsdauer T3 wird die Zeitfensterstufe 40 eingeschaltet, wie dies in Fig.2o dargestellt ist. Dabei ist der Einschaltzeitpunkt der Zeitfensterstufe 40 in Abhängigkeit von dem zuvor mit der Zeitmeßstufe 41 gemessenen und gespeicherten Zeitabstand T5 zur Mitte zwischen dieselben vorgegebenen Flanken, nämlich die fallenden Flanken, von zwei Zeilenimpulsen verschoben, wie dies in den Figuren 2n und 2o angegeben ist. Die Zeitfensterstufe 40 aktiviert wiederum die Flankendetektorstufe 43, die daraufhin die fallende Flanke von wieder dem gleichen Zeilenimpuls H detektiert, der dabei im Mittenbereich der Zeitfensterdauer T4 der Zeitfensterstufe 40 liegt, weil die zeitliche Lage der Zeitfensterdauer T4 der Zeitfensterstufe 40 mittels der Zeitkorrekturstufe 38 an das zeitliche Auftreten der Zeilenimpulse H angepaßt wurde, so daß mit großer Sicherheit stets derselbe Zeilenimpuls H im ersten Halbbild der wiedergegebene Bildsignale detecktiert wird. Selbstverständlich könnte die Detektoreinrichtung auch so ausgebildet sein, daß auch im zweiten Halbbild eine Detektion jeweils des gleichen Zeilenimpulses erfolgt. Wenn die Flannkendetektorstufe 43 die fallende Flanke des jeweils gleichen Zeilenimpulses H detektiert hat, gibt sie wieder ein Steuersignal an den Startimpulsflankengenerator 44 ab, der daraufhin eine Startimpulsflanke S3 erzeugt, wie sie in Fig.2p dargestellt ist.

Wie aus vorstehender Erläuterung hervorgeht, ist bei dem vorliegenden System auf einfache Weise erreicht, daß der Beginn des Eintastens der Zeichensignale stets von dem gleichen Zeilenimpuls abgeleitet ist, so daß das Eintasten der Zeichensignale stets bei der gleichen Zeile beginnt und somit kein störendes Springen des Bildinhaltes der Zeichensignale gegenüber dem Bildinhalt der vom Magnetband wiedergegebenen Bildsignale auftritt.

Die Erfindung ist nicht auf das vorstehend beschriebene Ausführungsbeispiel beschränkt. Es gibt eine Reihe von weiteren Ausführungsmöglichkeiten, dies insbesondere hinsichtlich der Ausbildung der Steuereinrichtung und der darin enthaltenen Detektoreinrichtung zum Detektieren des jeweils gleichen Zeilenimpulses. Auch hinsichtlich der Ausbildung des Zeichengenerators gibt es andere Ausführungsmöglichkeiten; beispielsweise können die wiedergegebenen Bildsignale dem Zeichengenerator selbst zugeführt werden und die Zeichensignale intern im Zeichengenerator in die wiedergegebenen Bildsignale eingetastet werden.

## Patentansprüche

1. System (1) zum Wiedergeben von Bildsignalen von einem bandförmigen magnetisierbaren Aufzeichnungsträger (3), auf dem die Bildsignale in nebeneinanderliegenden schrägen Spuren aufgezeichnet sind, mit mindestens einem rotierend antreibbaren Magnetkopf (5, 6) zum aufeinanderfolgenden Abtasten der Spuren, mit einer Impulserzeugungseinrichtung (11), die jeweils am Beginn des Abtastens einer Spur durch den Magnetkopf (5, 6) eine Positionsimpulsflanke (P1, P2, P3, P4) erzeugt, die die Position des Magnetkopfes (5, 6) gegenüber dem Anfang einer Spur und der darin aufgezeichneten Bildsignale kennzeichnet, und mit einem zum Eintasten von Zeichensignalen in die wiedergegebenen Bildsignale vorgesehenen Zeichengenerator (23), der die Zeichensignale jeweils in Abhängigkeit von einer mittels einer Startimpulsflanken (S1, S2, S3) erzeugenden Steuereinrichtung (25) in einem Zeitabstand (T2+T3+T5, T2+T3+T6) von der Positionsimpulsflanke (P1, P2, P3, P4) erzeugten Startimpulsflanke (S1, S2, S3) und in Abhängigkeit von aus den wiedergegebenen Bildsignalen abgetrennten Zeilenimpulsen (H) in die wiedergegebenen Bildsignale eintastet, dadurch gekennzeichnet, daß die aus den Bildsignalen abgetrennten Zeilenimpulse (H) zusätzlich der Startimpulsflanken (S1, S2, S3) erzeugenden Steuereinrichtung (25) zugeführt werden und daß die Steuereinrichtung (25) eine Detektoreinrichtung (35) zum Detektieren des jeweils gleichen Zeilenimpulses (H) in den wiedergegebenen Bildsignalen aufweist und in Abhängigkeit von jeweils dem gleichen detektierten Zeilenimpuls (H) die Startimpulsflanke (S1, S3) für den Zeichengenerator (23) erzeugt und daß die Detektoreinrichtung (35) eine Zeitfensterstufe (40), die jeweils eine Zeitspanne (T2+T3) nach der Positionsimpulsflanke (P1, P3) zu einem Einschaltzeitpunkt eingeschaltet wird und für eine vorgegebene Zeitfensterdauer (T4) eingeschaltet bleibt, und eine von der Zeitfensterstufe (40) gesteuerte Flankendetektorstufe (43) zum Detektieren des Auftretens einer vorgegebenen Flanke des jeweils gleichen Zeilenimpulses (H) nach dem Einschaltzeitpunkt innerhalb der Zeitfensterdauer (T4) aufweist.

2. System nach Anspruch 1, dadurch gekennzeichnet, daß die Detektoreinrichtung (35) zusätzlich eine Zeitmeßstufe (41) zum Messen des Zeitabstandes (T5) zwischen dem Einschaltzeitpunkt der Zeitfensterstufe (40) und dem Auftrittszeitpunkt der vorgegebenen Flanke des detektierten Zeilenimpulses (H) und eine Zeitkorrekturstufe (38) aufweist, die in Abhängigkeit von dem gemessenen Zeitabstand (T5) den nachfolgenden Einschaltzeitpunkt der Zeitfensterstufe (40) im wesentlichen zur Mitte zwischen den vorgegebenen Flanken von zwei Zeilenimpulsen (H) verschiebt (Fig.1, 2).

3. System nach Anspruch 2, dadurch gekennzeichnet, daß die Zeitfensterdauer (T4) der Zeitfensterstufe (40) im wesentlichen dem Zeitabstand zwischen zwei Zeilenimpulsen (H) gleich ist (Fig.1, 2).

## Claims

1. A system (1) for the reproduction of picture signals from a magnetisable record carrier (3) in tape form, on which the picture signals have been recorded in juxtaposed inclined tracks, the system comprising at least one rotatable magnetic head (5, 6) for consecutively scanning the tracks, a pulse generating device (11) which at the beginning of each scan of a track by the magnetic head generates a position-pulse edge (P1, P2, P3, P4) which marks the position of the magnetic head relative to the beginning of a track and the picture signals recorded therein, and a character generator (23) for inserting character signals into the reproduced picture signals, which generator each time inserts the character signals into the reproduced picture signals depending on a starting-pulse edge (S1, S2, S3) generated by means of a control device (25), which generates starting-pulse edges (S1, S2, S3), at a time interval (T2+T3+T5, T2+T3+T6) from the position-pulse edge (P1, P2, P3, P4) and depending on the line pulses (H) extracted from the reproduced picture signals, characterized in that the line pulses (H) extracted from the picture signals are, in addition, applied to the control device (25), which generates starting-pulse edges (S1, S2, S3), and the control device (25) comprises a detector device (35) for detecting each time the same line pulse (H) in the reproduced picture signals and depending on each time the same detected line pulse (H) generates the starting-pulse edge (S1, S3) for the character generator (23), and the detector device (35) comprises a time-window stage (40) which is each time started at a starting instant situated a time interval (T2+T3) after the position-pulse edge (P1, P3) and which remains operative for the duration of a predetermined time window T4), and an edge-detector stage (43), controlled by the time-window stage (40), to detect the occurrence of a predetermined edge of each time the same line pulse (H) after the starting instant within the time window (T4).

2. A system as claimed in Claim 1, characterized in that the detector device (35) in addition comprises a time-measurement stage (41) for measuring the time interval (T5) between the starting instant of the time-window stage (40) and the instant at which the predetermined edge of the detected line pulse (H) occurs, and a time-correction stage (38) which, depending on the measured time interval (T5), shifts the starting instant of the time-window stage (40) substantially relative to the centre between the predetermined edges of two line pulses (H) (Figs. 1, 2).

3. A system as claimed in Claim 2, characterized in that the duration of the time window (T4) of the time-window stage (40) is substantially equal to the time interval between two line pulses (H) (Figs. 1, 2).

## Revendications

1. Système (1) pour la reproduction de signaux d'image à partir d'un support d'enregistrement (3) magnétisable en forme de bande, sur lequel les signaux d'image sont enregistrés dans des pistes obliques disposes les unes à côté des autres, comprenant au moins une tête magnétique (5, 6) pouvant être entraînée en rotation pour l'analyse successive des pistes, un générateur d'impulsions (11) qui génère, à chaque début d'analyse d'une piste par la tête magnétique (5, 6), un flanc d'impulsion de position (P1, P2, P3, P4) qui caractérise la position de la tête magnétique (5, 6) par rapport au début d'une piste ainsi que les signaux d'image enregistrés dans cette piste, et un générateur de caractères (23) prévu pour l'introduction de signaux de caractères dans les signaux d'image reproduits, le générateur de caractères introduisant les signaux de caractères dans les signaux d'image reproduits chaque fois en fonction d'un flanc d'impulsion de démarrage généré au moyen d'un dispositif de commande (25) générant un flanc d'impulsion de démarrage (S1, S2, S3) dans un certain intervalle de temps (T2+T3+T5, T2+T3+T6) à partir du flanc d'impulsion de position (P1, P2, P3, P4) et en fonction des impulsions de lignes (H) séparées des signaux d'image reproduits, caractérisé en ce que les impulsions de lignes (H) séparées des signaux d'image sont en outre transmises au dispositif de commande (25) générant les flancs d'impulsions de démarrage (S1, S2, S3) et en ce que le dispositif de commande (25) comporte un dispositif de détection (35) destiné à détecter chaque fois la même impulsion de ligne (H) dans les signaux d'image reproduits et génère, en fonction de l'impulsion de ligne (H) détectée chaque fois identique, le flanc d'impulsion de démarrage (S1, S3) pour le générateur de caractères (23), en ce que le dispositif de détection (35) présente un étage à fenêtre temporelle (40) qui est enclenché, chaque fois après un intervalle de temps (T2+T3) suivant le flanc d'impulsion de position (P1, P3), à un instant d'enclenchement et qui reste enclenché pendant une durée de fenêtre temporelle (T4) prédéterminée, ainsi qu'un étage de détection de flanc (43) commandé par l'étage à fenêtre temporelle (40) et destiné à détecter l'apparition d'un flanc prédéterminé de l'impulsion de ligne (H) chaque fois identique après l'instant d'enclenchement pendant la durée de fenêtre temporelle (T4).

2. Système selon la revendication 1, caractérisé en ce que le dispositif de détection (35) comporte en outre un étage de mesure du temps (41) destiné à mesurer l'intervalle de temps (T5) entre l'instant d'enclenchement de l'étage à fenêtre temporelle (40) et l'instant d'apparition du flanc prédéterminé de l'impulsion de ligne (H) détectée, de même qu'un étage de correction du temps (38) qui, en fonction de l'intervalle de temps (T5) calculé, décale l'instant d'enclenchement suivant de l'étage à fenêtre temporelle (40) sensiblement vers le centre entre les flancs prédéterminés de deux impulsions de lignes (H) (Fig. 1, 2).

3. Système selon la revendication 2, caractérisé en ce que la durée de fenêtre temporelle (T4) de l'étage à fenêtre temporelle (40) est sensiblement identique à l'intervalle de temps entre deux impulsons de lignes (H) (Fig. 1, 2).
